# EUROPÄISCHE PATENTSCHRIFT

(11) **EP 1 643 271 B1**
(45) Veröffentlichungstag und Bekanntmachung des Hinweises auf die Patenterteilung: **03.10.2007**
(21) Anmeldenummer: 05107514.1
(22) Anmeldetag: 16.08.2005
(51) Int. Cl.: G01S 13/93, G01S 15/93, B62D 15/02

(54) **Verfahren und Vorrichtung zum Klassifizieren von Seitenbegrenzungen einer Parklücke für ein Einparkassistenzsystem eines Kraftfahrzeugs**
Method and device for classifying side boundaries of a parking space for a parking assistance system of a motor vehicle
Procédé et dispositif pour classifier des limites latéraux d'une place de stationnement pour un système d'assistance au stationnement d'un véhicule automobile

(30) Priorität: 30.09.2004 DE 102004047479
(43) Veröffentlichungstag der Anmeldung: 05.04.2006
(73) Patentinhaber: ROBERT BOSCH GMBH, 70442 Stuttgart (DE)
(72) Erfinder: Danz, Christian, 70469, Stuttgart (DE); Schmid, Dirk, 75397, Simmozheim (DE); Lehner, Philipp, 75417, Muehlacker (DE); Faber, Petko, 71229, Leonberg (DE); Schaaf, Gunther, 70806, Kornwestheim (DE)

(56) Entgegenhaltungen:
- EP-A- 1 094 336
- EP-A- 1 308 751
- DE-A1- 3 844 340
- DE-A1- 10 114 932
- DE-A1- 10 132 860
- DE-A1- 19 645 339
- DE-U1- 29 804 296
- PATENT ABSTRACTS OF JAPAN Bd. 2000, Nr. 15, 6. April 2001 (2001-04-06) -& JP 2000 346936 A (NISSAN MOTOR CO LTD), 15. Dezember 2000 (2000-12-15)

## Beschreibung

### STAND DER TECHNIK

Die vorliegende Erfindung betrifft ein Verfahren zum Klassifizieren von Seitenbegrenzungen einer Parklücke für ein Einparkassistenzsystem eines Kraftfahrzeugs mit mindestens einem Abstandssensor und einer Steuereinrichtung,

Bei ansteigender Verkehrsdichte und geringerem Parkflächenangebot wird die Suche in Städten und verkehrsdichten Ballungsräumen für einen Fahrer eines Kraftfahrzeugs immer beschwerlicher.
Zu diesem Zweck sind Systeme zur Parklückenvermessung (PLV) zur Unterstützung des Fahrers bei der Suche nach einer ausreichend großen Parklücke bekannt. Dabei hilft dann ein so genannter Semiautonomer Einparkassistent (SPA = Semiautonomous Parking Assistent) oder ein Einparkassistenzsystem zügig in die gefundene Parklücke einzufahren. Somit werden lange oder erfolglose Einparkvorgänge vermieden.

Das Einparkassistenzsystem berechnet nach Ermittlung einer passenden Parklücke in Abhängigkeit von deren vermessener Länge eine optimale Einfahrbahn, eine so genannte Einfahrtrajektorie. Mittels geeigneter Anzeigeeinrichtungen (optisch, akustisch, haptisch, und dergleichen) wird dem Fahrer die Information übermittelt, wie er zu lenken, beschleunigen und bremsen hat, um optimal sein Fahrzeug in die Parklücke einzufahren. Die Abweichungen von dieser Einfahrtrajektorie werden vom Fahrer selbst oder automatisch abgeglichen. Die Längsbewegung wird vom Fahrer bestimmt. Das Lenken kann auch automatisch ausgeführt werden, wobei der Fahrer das Fahrzeug nur noch beschleunigt und abbremst.

Die DE 298 04 296 U1 offenbart eine Einparkhilfe mittels eines Ultraschallverfahrens zum Einparken neben einem Bordstein und warnt vor Berührung des Bordsteins. Die zugehörigen Abstandssensoren sind seitlich am Fahrzeug in der Nähe der Räder angebracht. Der Fahrer wird informiert, wenn die Abstandssensoren auf einer Seite beide gleichen Abstand zum Bordstein haben. Die Größe des Bordsteins kann ermittelt werden.

Patent Abstracts of Japan 2000 - 346936 beschreibt eine Einrichtung zur Objekterfassung, wobei Boden und Bordstein eines Abtastbereiches erkannt aber aus diesem Bereich ausgeklammert werden. Die Einrichtung besteht aus einem Abstandssensor mit horizontalem Abtastbereich und einem Verstellungssensor, der die Höhenlage des Fahrzeugs abtastet. Die Lage des Fahrzeugs wird mit einem Rechner bestimmt, auch der Reifendruck wird mit einbezogen. Wenn der Abstandssensor den Boden erfasst, wird seine Verstärkung reduziert. Der Abtastbereich wird nicht durch Boden- oder Bordsteinechos gestört.

Aus der DE 101 14 932 A1 ist ein Verfahren mit den Merkmalen des Oberbegriffs des Anspruchs 1 sowie eine dreidimensionale Umfelderfassung zu Erfassung des Umfeldes eines Straßenfahrzeugs mit umgebungserfassenden Sensoren bekannt. Durch die Aneinanderheihung von nacheinander aufgenommenen zweidimensionalen Entfemungsprofilen wird hierbei ein dreidimensionales Abbildung der Umgebung erzeugt. Die Umgebung wird dabei in einer Ausführungsform derart ausgewertet, dass bei Einparkvorgängen Quantisierungsstufen für überfahrbare Objekte, beispielsweise einen Bordstein, und nicht überfahrbare Objekte aufgrund der Lage eines Schwellwertvergleichs gebildet werden.

Ein weiteres Verfahren verwendet einen seitlichen Abstandssensor auf Ultraschallbasis, der beim Vorbeifahren an parkenden Fahrzeugen, die eine Parklücke begrenzen, mit einer konstanten Abtastrate die Grenzen der Parklücke erfasst, wobei die Entfernung zwischen diesen Grenzen bestimmt wird. Hierbei wird die höchst mögliche Abtastrate unabhängig von der Eigengeschwindigkeit des Fahrzeugs benutzt. Die Messreichweite der Ultraschallsensoren hängt jedoch unter anderem von der Schallgeschwindigkeit ab. Erhöht man die Abtastzeit, sinkt die Abtastrate. Das wiederum kann dazu führen, dass die Genauigkeit der Parklückenvermessung sinkt. Ultraschallbasierte Systeme sind sehr bekannt und vergleichsweise preiswert.

### VORTEILE DER ERFINDUNG

Das erfindungsgemäße Verfahren zum Klassifizieren von Seitenbegrenzungen einer Parklücke für ein Einparkassistenzsystem eines Kraftfahrzeugs mit mindestens einem Abstandssensor und einer Steuereinrichtung mit den Merkmalen des unabhängigen Patentanspruchs 1 ermöglicht es, eine Seitenbegrenzung einer Parklücke im Vorbeifahren zu erfassen und beim Einfahren zu plausibilisieren. Das hat den Vorteil, dass eine sichere Unterscheidung von Seitenbegrenzungen wie Wänden und Bordsteinen auch mit vorhandener Sensorik, insbesondere Ultraschallsensorik durchgeführt werden kann, wobei eine Einfahrtrajektorie in eine Parklücke abhängig von der Seitenbegrenzung mit großer Genauigkeit erzeugt wird.

Die Grundidee der Erfindung wird im Folgenden erläutert.

Kern der Erfindung ist die Auswertung und Klassifizierung eines Echosignals einer Seitenbegrenzung in Bezug auf seine Impulslänge und Amplitude. Eine sich anschließende Plausibilisierung führt eine weitere Auswertung der bereits klassifizierten Echosignale in Bezug auf ihre Amplitude durch.

Ein wesentlicher Vorteil der Erfindung ist, dass der Fahrer eines Kraftfahrzeugs eine vollständige Erfassung des freien Parklückenraumes im Vorbeifahren und dabei eine Klassifizierung der Seitenbegrenzung der Parklücke mit Plausibilisierung der erfassten Daten für die Seitenbegrenzung beim Einparken in sicherer Weise ausführen kann.

Das erfindungsgemäße Verfahren zum Klassifizieren von Seitenbegrenzungen einer Parklücke für ein Einparkassistenzsystem eines Kraftfahrzeugs mit mindestens einem Abstandssensor und einer Steuereinrichtung weist folgende Verfahrensschritte auf:
(S1) Abtasten mit dem Abstandssensor der Parklücke zum Ermitteln der Seitenbegrenzung der Parklücke;
(S2) Auswerten eines Echoimpulses des Abstandssensors zum Klassifizieren der ermittelten Seitenbegrenzung; und
(S3) Übergeben von Daten der so klassifizierten Seitenbegrenzung an das Einparkassistenzsystem.

In einer Ausführungsform der Erfindung erfolgt das Abtasten mit dem Abstandssensor zum Ermitteln der Seitenbegrenzung der Parklücke im Verfahrensschritt (S1) zusammen mit Messen einer Tiefe der Parklücke.

Auf diese Weise ist es vorteilhaft ermöglicht, das Messsignal der Tiefe der Parklücke zusätzlich auszuwerten, indem weitere in ihm enthaltene Informationen über die Seitenbegrenzung der Parklücke ausgewertet werden.

Der Verfahrensschritt (S2) Auswerten eines Echoimpulses weist erfindungsgemäß die folgenden Teilschritte auf:
(S2a) Vergleichen einer Amplitude des Echoimpulses mit einem vorgebbaren Schwellwert;
(S2b) Ermitteln einer Impulslänge des Echoimpulses, wenn der vorgebbare Schwellwert überschritten wird;
(S2c) Vergleichen der Impulslänge des Echoimpulses mit einem gespeicherten Tabellenwert zum Klassifizieren der Seitenbegrenzung; und
(S2d) Erzeugen von korrespondierenden Daten zu der so klassifizierten Seitenbegrenzung.
Der Vergleich der Amplitude eines Echoimpulses ermöglicht eine Unterdrückung von Störsignalen, wobei die Möglichkeit der Vorgabe eines Schwellwertes eine individuelle Anpassung an verschiedene Kraftfahrzeuge schafft. Die Impulslänge des Echoimpulses ist vorteilhaft einfach mittels Vergleich mit dem vorgebbaren Schwellwert zu erfassen und mit gespeicherten Tabellenwerten zu vergleichen, die in vorhandenen Speichereinrichtungen abgelegt sind und auch erweitert bzw. aktualisiert werden können.

In einer weiteren Ausgestaltung ist es vorteilhaft, dass im Teilschritt (S2c) die Impulslänge und die Amplitude des Echoimpulses oder nur die Amplitude des Echoimpulses mit gespeicherten Tabellenwerten zum Klassifizieren der Seitenbegrenzung verglichen wird.
Hierdurch wird eine weitere vorteilhafte erweiterte Anpassungsfähigkeit für die Klassifizierung von weiteren unterschiedlichen Seitenbegrenzungen möglich gemacht.

Der Verfahrensschritt (S3) Übergeben von Daten weist die folgenden Teilschritte auf:
(S3a) Übergeben von Daten der klassifizierten Seitenbegrenzung an das Einparkassistenzsystem zum Erzeugen einer Einfahrtrajektorie durch das Einparkassistenzsystem;
(S3b) Abtasten der Seitenbegrenzung mittels des Abstandssensors und Auswerten des Echoimpulses des Abstandssensors beim Einparken des Fahrzeugs in die Parklücke längs der Einfahrtrajekorie zum Plausibilisieren der ermittelten Seitenbegrenzung; und
(S3c) Weiteres Ausführen des Einparkens längs der Einfahrtrajektorie bei erfolgreicher Plausibilisierung oder Erzeugen einer korrigierten Einfahrtrajektorie.
In dieser bevorzugten Ausgestaltung der vorliegenden Erfindung ist es besonders vorteilhaft möglich, die Klassifizierung der Seitenbegrenzung der Parklücke beim Vorbeifahren beim Vorgang des Einparkens zu plausibilisieren, wobei eine nachträgliche Korrektur der Einfahrtrajektorie gegebenenfalls erfolgt. Auf diese Art und Weise wird die Sicherheit des Einparkassistenzsystems vorteilhaft erhöht.

Im Teilschritt (S3b) Abtasten der Seitenbegrenzung wird eine Empfindlichkeit des Abstandssensors in Stufen verringert wird, wobei die Amplitude seines Echoimpulses mit einem vorgebbaren Schwellwert und/oder Muster zum Klassifizieren der Seitenbegrenzung verglichen wird.
So wird auf vorteilhaft einfache Weise erreicht, dass beispielsweise ein Bordstein von einer Wand als Seitenbegrenzung unterschieden werden kann. Ein Vergleich mit einem Muster ist besonders vorteilhaft, da damit vorher gespeicherte Musterwerte von unterschiedlichen Seitenbegrenzungen einfach und schnell identifiziert und somit die aktuelle Seitenbegrenzung schnell klassifiziert werden kann.

In einer weiteren bevorzugten Ausgestaltung ist vorgesehen, dass im Teilschritt (S3b) Abtasten der Seitenbegrenzung ein Abstrahlwinkel eines Abstandssensors in auf verschiedene vorgebbare Werte umgestellt wird, wobei die Amplitude seines Echoimpulses mit einem vorgebbaren Schwellwert und/oder Muster zum Klassifizieren der Seitenbegrenzung (6) verglichen wird.
In dieser Ausführung ist es durch unterschiedliche Abstrahlwinkel durch Einstellen der Sensoren oder Umschalten verschiedener Sensoren besonders vorteilhaft möglich, einen Bordstein in unterschiedlichen Höhen von einer Wand zu unterscheiden.

Eine erfindungsgemäße Vorrichtung zum Vermessen einer Parklücke (3) für ein Einparkassistenzsystem eines Kraftfahrzeugs (1) weist Folgendes auf:
mindestens einen Abstandssensor zum Erfassen einer Seitenbegrenzung;
eine Steuereinrichtung für Betrieb von Abstandssensoren und ihre Signalauswertung; und
Messwertgeber zur Ermittlung von Betriebsdaten des Kraftfahrzeugs.

In bevorzugter Ausgestaltung weist die Vorrichtung mindestens einen seitlichen Abstandssensor auf.
Hiermit ist es möglich, beim Vorbeifahren des Kraftfahrzeugs an einer Parklücke deren Seitenbegrenzung vorteilhaft zu erfassen, da der seitliche Abstandssensor in einem rechten oder annähernd rechten Winkel zur Fahrtrichtung angeordnet ist, und so in die Parklücke gerichtet ist.

Die Steuereinrichtung weist mindestens eine Speichereinrichtung für vorgebbare Schwellwerte und eine Einrichtung für gespeicherte Daten von Vergleichswerten und/oder Mustern von Seitenbegrenzungen auf, wodurch Vergleichswerte auf einfache Weise zum Abruf und Vergleich nicht nur bereitstehen, sondern auch einfach ausgewechselt oder eingegeben werden können.

In bevorzugter Ausführung ist die Steuereinrichtung Bestandteil eines Einparkassistenzsystems. Sie kann aber auch separat oder zum Teil separat im Kraftfahrzeug angeordnet sein. Dadurch wird einerseits wenig Platz eingenommen beziehungsweise eine besondere Flexibilität möglich.

Eine weitere Ausführungsform sieht vor, dass ein Abstrahlwinkel mindestens eines Abstandssensors einstellbar ausgebildet ist.
In dieser Ausgestaltung ist eine Einstellbarkeit des jeweiligen Abstandssensors vorgesehen, wodurch sich eine besonders vorteilhafte gesteuerte Abtastung der Seitenbegrenzung nach oben und unten ergibt.

Vorteilhafte Ausgestaltungen und Weiterbildungen der Erfindung sind den Unteransprüchen und der Beschreibung unter Bezugnahme auf die Zeichnungen entnehmbar.

### ZEICHNUNGEN

Die Erfindung wird nachfolgend anhand des in der Figur der Zeichnung angegebenen Ausführungsbeispiels näher erläutert.

Es zeigt dabei:
FIG. 1 eine schematische Darstellung einer ersten Phase einer Einparksituation;
FIG. 2 eine schematische Darstellung einer zweiten Phase einer Einparksituation;
FIG. 3 eine schematische Darstellung eines ersten Signalverlaufs eines Echosignals;
FIG. 4 eine schematische Darstellung eines zweiten Signalverlaufs eines Echosignals; und
FIG. 5 eine schematische Darstellung einer Ausführungsform der erfindungsgemäßen Vorrichtung in einem Kraftfahrzeug.

### BESCHREIBUNG DER AUSFÜHRUNGSBEISPIELE

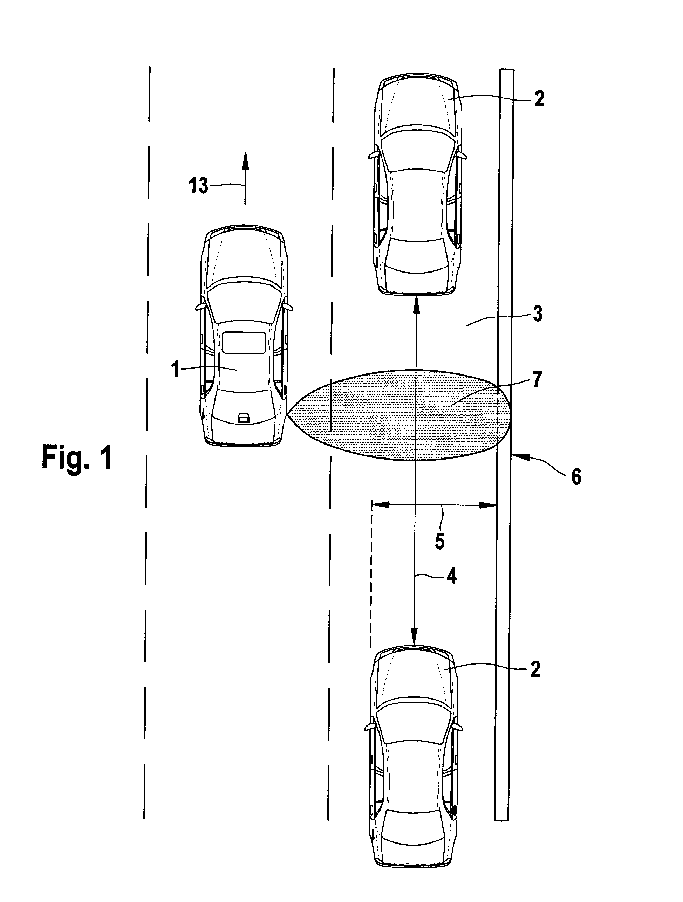

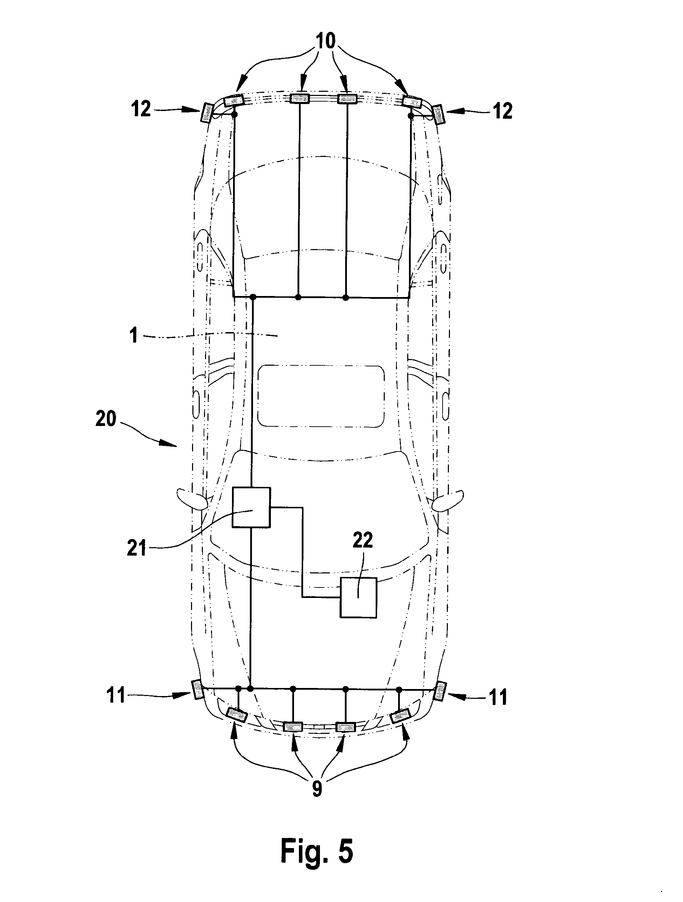

In Figur 1 ist eine erste Phase einer Einparksituation dargestellt. Ein vorbeifahrendes Kraftfahrzeug 1 fährt auf der Fahrbahn einer Straße in Fahrtrichtung 13, die durch einen Pfeil gekennzeichnet ist, an parkenden Fahrzeugen 2 auf einem Parkstreifen vorbei, zwischen welchen sich eine Parklücke 3 befindet. Die Parklücke 3 hat eine Länge 4, die durch einen beidseitigen Pfeil bezeichnet ist, und erstreckt sich zwischen der Vorderseite und Rückseite von zwei parkenden Fahrzeugen 2, von denen eines in Fahrtrichtung 13 vor und ein weiteres hinter der Parklücke 3 steht. Eine Tiefe 5 der Parklücke 3 erstreckt sich von einer Seitenbegrenzung 6 der Straße quer zu dieser über den Parkstreifen bis zur Fahrbahn. Am Kraftfahrzeug 1 ist an der rechten Seite im hinteren Abschnitt dieses Fahrzeugs ein Abstandssensor 12 (siehe Figur 5) angeordnet, welcher einen Abtastbereich 7 abtastet.

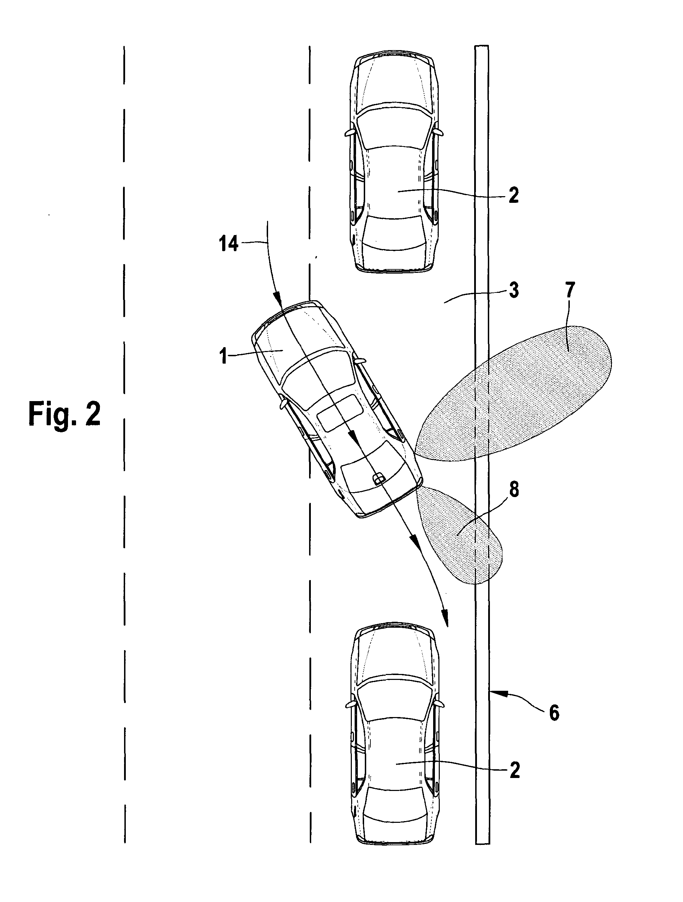

Ein im Kraftfahrzeug 1 angeordnetes Einparkassistenzsystem, welches auch mit Messwertgebern 22 (siehe Fig. 5), wie beispielsweise Wegsignalgeber und Lenkwinkelsensor, ausgerüstet sein kann, ist die Vermessung der Parklücke 3 erforderlich, damit dieses Assistenzsystem eine zufriedenstellende Bahnplanung zum Einfahren in die Parklücke 3 ermitteln kann. Diese Bahnplanung wird auch als Einfahrtrajekorie 14 bezeichnet und ist in der Figur 2 gezeigt. Diese Vermessung wird auf unterschiedliche bekannte Art und Weise mittels Abstandssensoren 9, 10, 11, 12 durchgeführt (siehe Fig. 5). Dieses ist auch bei Verkehrssystemen mit Linksverkehr möglich.

Die hierzu eingesetzten Abstandssensoren 9 bis 12 sind im vorliegenden Beispiel Ultraschallsensoren, die einen Schallimpuls aussenden und das von ihm an einem Objekt reflektierte Echo auswerten, wobei die Laufzeit des Echos ein Maß für den Abstand des Objektes zum Abstandssensor bzw. zum Fahrzeug ist, an dem der Abstandssensor angebracht ist. Diese sogenannten Echoverfahren zur Abstandsbestimmung sind bekannt und sollen nicht weiter erläutert werden.

Die Abstandssensoren sind Kraftfahrzeug 1 im vorderen und hinteren Bereich angeordnet, wie Figur 5 veranschaulicht. Es sind je Bereich sechs Sensoren üblich, von denen jeweils vier vordere Abstandssensoren 9 und vier hintere Abstandssensoren 10 die jeweiligen davorliegenden Bereich abdecken. Für seitliche Abtastung sind jeweils zwei vordere seitliche Abstandssensoren 11 und zwei hintere seitliche Abstandssensoren 12 am Kraftfahrzeug 1 angeordnet. Das Vermessen der Parklücke 3 erfolgt beispielsweise mit den seitlichen Abstandssensoren 11 und/oder 12. Die vorderen und hinteren Abstandssensoren 9 und 10 dienen beim Einparkvorgang zum Rangieren des Kraftfahrzeugs 1 innerhalb der Parklücke 3, um Zusammenstöße mit den die Parklücke begrenzenden parkenden Fahrzeugen 2 zu verhindern.

Die erste Phase der Einparksituation an einer Parklücke 3 mit einer beispielhaften Ausführungsform des erfindungsgemäßen Verfahrens stellt Figur 1 dar. Der Fahrer des vorbeifahrenden Kraftfahrzeugs 1 schaltet die in seinem Fahrzeug vorhandene Einparkhilfe ein, wobei beim Weiterfahren, das heißt beim Passieren der Parklücke 3, diese von den Abstandssensoren 9 bis 12 in bekannter Weise in ihrer Länge 4 und Tiefe 5 abgetastet wird.

In diesem Ausführungsbeispiel wird der seitliche hintere Abstandssensor 12 benutzt, um die Seitenbegrenzung 6 der Parklücke 3 zu ermitteln. Hier erfolgt in einem ersten Verfahrensschritt S 1 das Ermitteln der Position der Seitenbegrenzung 6, die ein Bordstein oder beispielsweise eine Mauer sein kann, über einen ersten Abtastbereich 7 des Abstandssensors 12. Ist die Seitenbegrenzung 6 beispielsweise als ein Bordstein flach ausgebildet, so stellt ein Überqueren mit Teilen der Karosserie des Kraftfahrzeugs 1 keine Gefahren dar. Ist die Seitenbegrenzung 6 jedoch beispielsweise eine Wand oder eine Mauer, so kann muss diese Art ebenfalls eindeutig erfasst beziehungsweise klassifiziert werden, denn diese Information ist für das Erstellen der Einfahrtrajektorie 14 besonders wichtig, da ein Überqueren dieser "Grenze" mit einem Teil des Kraftfahrzeugs 1 zu Schäden führen kann.

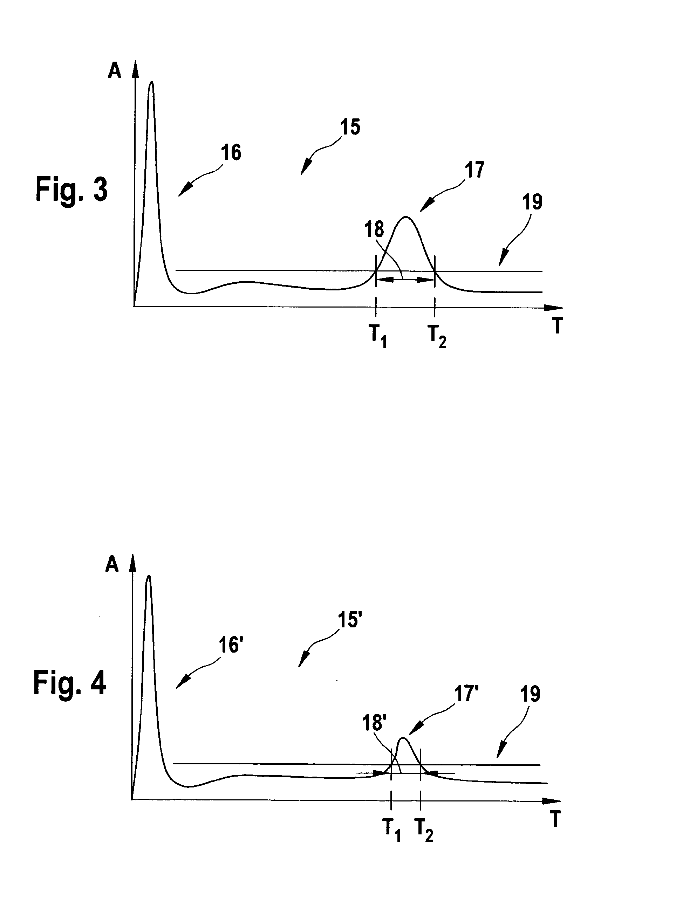

Dazu wird in einem zweiten Verfahrensschritt S2 das Echosignal des Abstandssensors 12 in einer im Folgenden mit Bezugnahme auf die Figuren 3 und 4 beschriebenen Weise ausgewertet, die es ermöglicht, die Art der Seitenbegrenzung 6 zu klassifizieren.

In Figur 3 ist ein erster Signalverlauf 15 mit seiner Amplitude A über einer Zeitachse T dargestellt. Figur 3 zeigt einen typischen Signalverlauf eines Signals, das anfänglich von einem Sender ausgesendet wird, wobei ein so genannter Anfangsübersprecher 16 auftritt. Ein von einem Objekt reflektierter Echoimpuls 17 tritt zu einem Zeitpunkt T1 auf, wobei dieser Echoimpuls eine bestimmte Zeitdauer bis zu einem weiteren Zeitpunkt T2 aufweist. Die Zeitpunkte T1 und T2 sind mittels eines Schwellwertes 19 festgelegt, der einem vorher festlegbaren Amplitudenwert entspricht. Bei diesem bekannten so genannten Echosignalverfahren entspricht die Zeitdauer vom Aussenden des Signals bis zum Auftreten eines Echos der Entfernung des so abgetasteten Objekts vom Sender. Die Zeitdifferenz der Zeitpunkte T1 und T2 wird im Weiteren als Impulslänge 18 bezeichnet.

Figur 4 zeigt zur Illustration einen zweiten Signalverlauf 15`, der wie der erste Signalverlauf 15 in Figur 3 einen Anfangsübersprecher 16' und einen Echoimpuls 17' mit einer im Gegensatz zum Echoimpuls 17 nach Figur 3 kürzeren Impulslänge 18' aufweist.

Im erfindungsgemäßen Verfahren wird der Echoimpuls 17; 17' mit seiner jeweiligen Impulslänge 18, 18' zur Klassifizierung der Seitenbegrenzung verwendet. Bei einer weiteren Ausführungsform wird zusätzlich die Amplitude des Echoimpulses 17, 17' ausgewertet. Eine alleinige Auswertung der Amplitude des Echosignals 17; 17' ist auch möglich.

Die Auswertung der Impulslänge 18, 18' und/oder der Amplitude des Echoimpulses 17, 17' erfolgt einerseits im Vergleich mit vorgebbaren Sollwerten, die in einer Einrichtung der Steuereinrichtung 21 gespeichert sind, beispielsweise in einem Speicher. Diese Einrichtung kann zum Beispiel auch ein auswechselbares Speicherelement wie eine CD und/oder DVD sein. Ebenfalls ist es möglich, dass der Echoimpuls 18, 18' mit seinem charakteristischen Verlauf in bekannter Weise mit vorgebbaren gespeicherten Mustern verglichen wird.

Eine kleine Impulslänge 18' entspricht einer niedrigen Seitenbegrenzung 6, wie beispielsweise ein Bordstein. Ein große Impulslänge 18 charakterisiert eine größere Seitenbegrenzung 6, zum Beispiel eine Mauer. Die jeweilige zugehörige Amplitude kann als weiteres Kriterium verwendet werden, um zum Beispiel einen hohen oder niedrigen Bordstein als Seitenbegrenzung 6 zu klassifizieren. Bei einem niedrigen Bordstein ist ein Überfahren desselben mit den Rädern des Kraftfahrzeugs 1 eher möglich als bei einem hohen, der eventuell Schäden an den Reifen verursachen könnte.

Bei einer Seitenbegrenzung 6, welche beispielsweise aus einem Maschendrahtzaun besteht, ist eine Klassifizierung ebenfalls möglich, wobei hierbei ein Vergleich mit vorgebbaren Mustern zweckmäßig ist.

Die so schon während der Vorbeifahrt des Kraftfahrzeugs 1 an der Parklücke 3 erfasste und klassifizierte Seitenbegrenzung 6 der Parklücke 3 wird im Verfahrensschritt S3 in einer bestimmten Datenform an das Einparkassistenzsystem zur Erzeugung einer Einfahrtrajektorie 14 weitergeleitet. Die Einfahrtrajektorie 14 kann nun so berechnet werden, dass das Kraftfahrzeug 1 während eines folgenden Einparkvorgangs nicht mit seiner Karosserie an eine Wand als Seitenbegrenzung 6 anstoßen kann.

In einer weiteren bevorzugten Ausgestaltung des erfindungsgemäßen Verfahrens wird das beim Vorbeifahren des Kraftfahrzeugs 1 an der Parklücke 3 erfolgte Klassifizieren der Seitenbegrenzung 6 der Parklücke 3 beim Einparken durch einen weiteren Vorgang plausibilisiert, um eine noch größere Sicherheit und eventuelle Ungenauigkeiten beim Abtasten der Seitenbegrenzung 6 zu minimieren beziehungsweise auszuschließen.

Für diesen Vorgang des Plausibilisierens wird, im Falle des üblichen Rückwärtseinparkens, der hintere seitliche Abstandssensor 12 oder zusätzlich einer oder mehrere der hinteren Abstandssensoren 10 beim Einparken längs der Einfahrtrajektorie 14 verwendet. Diese zweite Phase des Einparkens ist in Figur 2 dargestellt. Hier wird ein zweiter Abtastbereich 8 gezeigt, zum Beispiel der eines hinteren Abstandssensors 10. Hierbei wird die Empfindlichkeit des oder der hierzu verwendeten Abstandssensoren 10, 12 in Stufen verringert, beispielsweise in Abhängigkeit vom zurückgelegten Weg. Zum Verringern der Empfmdlichkeit werden Kennlinienparameter der Sensoren automatisch angepasst. Nach Unterschreiten einer bestimmten Amplitude des Echosignals, die einem vorgebbaren Schwellwert entspricht, beispielsweise dem in Figur 3 und 4 dargestellten Schwellwert 19, das bedeutet ab einer bestimmten unteren Grenzempfindlichkeit in einer bestimmten Entfernung zur Seitenbegrenzung 6 wird ein Bordstein nicht mehr abgetastet, eine Wand jedoch. Hierbei ist das Ausbleiben eines Echos auch ein weiteres Klassfizierungsmerkmal für die Höhe eines Bordsteins. Die Höhe der Amplitude kann in diesem Fall auch zusätzlich mit der Impulslänge 18, 18' des ausgewertet werden, um eine noch höhere Zuverlässigkeit des Plausibilisierens zu erreichen.
Falls unter diesen Umständen eine Kollision unvermeidlich ist, wenn ein Bordstein als Seitenbegrenzung 6 vorher abgetastet wurde, dieser sich jedoch als Wand bei der Plausibilisierung herausstellt, kann die Erzeugung der Einfahrtrajektorie 14 erneut gestartet werden, um Einparkhinweise für den Fahrer des Kraftfahrzeugs zu aktualisieren.

Figur 5 zeigt ein Kraftfahrzeug 1 mit einer Anordnung einer erfindungsgemäßen Vorrichtung 20 in schematischer Darstellung. Vordere Abstandssensoren 9, Hintere Abstandssensoren 10, vordere seitliche Abstandssensoren 11 und hintere seitliche Abstandssensoren 12 sind außen am Kraftfahrzeug 1 angeordnet, beispielsweise in bekannter Weise in Stoßfängern. Diese Sensoren 9 bis 12 sind an eine Steuereinrichtung 21 über ein bekanntes Bussystem oder in anderer Art angeschlossen. Die Steuereinrichtung 21 weist bekannte Einrichtungen zur Ansteuerung der Sensoren 9 bis 12 zum Aussenden und Empfangen von Signalen auf, wobei sie auch die empfangenen Echosignale bezüglich des Abstands zu erfassten Objekten auswertet und Daten des Betriebszustands des Kraftfahrzeugs 1 miteinbezieht, welche nur symbolisch in Gestalt eines Messwertgebers 22 angedeutet sind.

Der Steuereinrichtung 21 weist weiterhin eine Einrichtung zum Speichern von vorgebbaren Schwellwerten und/oder Mustern auf. Hierzu können auch auswechselbare Speichermedien wie CD, DVD, Bandspeicher, Halbleiterspeicher und dergleichen gehören.

Die Steuereinrichtung 21 kann zum Beispiel als Softwareausführung Bestandteil einer schon vorhandenen Steuereinrichtung für Abstandssensorsysteme sein. Sie kann aber auch komplett oder nur teilweise separat im Kraftfahrzeug 1 angeordnet sein.

Im Falle von Parklücken zwischen im rechten Winkel zur Fahrbahn stehenden Fahrzeugen, in die im Gegensatz zu der in Figur 1 und 2 gezeigten nicht in der Einfahrtrajektorie 14 eingeparkt wird, kann das erfindungsgemäße Verfahren zur Anwendung kommen. Hierbei wird in einen Modus geschaltet, der eine größer Reichweite aufweist. Die hinteren Abstandssensoren 10 dienen hierbei zur Klassifizierung der Seitenbegrenzung der Parklücke und auch zur Plausibilisierung beim Einparken. Es ist für diesen Fall auch vorteilhaft, ein anderes Abstandsmesssystem wie beispielsweise RADAR oder dergleichen zu verwenden, was auch zusätzlich erfolgen kann.

Die Erfindung ist nicht auf die oben beschriebenen Ausführungsbeispiele beschränkt, sondern auf vielfältige Art und Weise modifizierbar.

So ist es beispielsweise denkbar, dass eine Minimalversion zum Vermessen einer Parklücke 3 für ein Einparkassistenzsystem zum Beispiel nur aus einem vorderen linken und rechten Abstandssensor 11 bzw. nur aus jeweils zwei seitlich ausgerichteten Abstandssensoren 11 oder 12 besteht.

Ebenfalls sind außer Ultraschallverfahren alle Echoverfahren, wie beispielsweise RADAR, LIDAR und dergleichen anwendbar. Auch die Kombination von unterschiedlichen Echoverfahren ist hierbei denkbar.

Die Anordnung von zwei Abstandssensoren 9 bis 12 innerhalb eines Gehäuses ist ebenfalls denkbar, wobei diese beispielsweise unterschiedliche Trägerfrequenzen bzw.

Einrichtungen aufweisen, die eine gegenseitige Störung verhindern und/oder außerdem verschieden Abstrahlwinkel aufweisen.

Ebenfalls sind Abstandssensoren 9 bis 12 denkbar, die in ihrem Abstrahlwinkel einstellbar ausgebildet sind und dazu beispielsweise Verstellantriebe aufweisen.

## Patentansprüche

1. Verfahren zum Klassifizieren von Seitenbegrenzungen (6) einer Parklücke (3) für ein Einparkassistenzsystem eines Kraftfahrzeugs (1) mit mindestens einem Abstandssensor (9, 10, 11, 12) und einer Steuereinrichtung (21), mit folgenden Verfahrensschritten:
(S1) Abtasten mit dem Abstandssensor (9, 10, 11, 12) der Parklücke (3) zum Ermitteln der Seitenbegrenzung (6) der Parklücke (3);
(S2) Auswerten eines Echoimpulses (17, 17') des Abstandssensors (9, 10, 11, 12) zum Klassifizieren der ermittelten Seitenbegrenzung (6); und
(S3) Übergeben von Daten der so klassifizierten Seitenbegrenzung (6) an das Einparkassistenzsystem, **dadurch gekennzeichnet,**
**dass** der Verfahrensschritt (S2) Auswerten eines Echoimpulses (17, 17') die folgenden Teilschritte aufweist:
(S2a) Vergleichen einer Amplitude des Echoimpulses (17, 17') mit einem vorgebbaren Schwellwert (19);
(S2b) Ermitteln einer Impulslänge (18, 18') des Echoimpulses (17, 17'), wenn der vorgebbare Schwellwert (19) überschritten wird;
(S2c) Vergleichen der Impulslänge (18, 18') des Echoimpulses (17, 17') mit einem gespeicherten Tabellenwert zum Klassifizieren der Seitenbegrenzung (6); und
(S2d) Erzeugen von korrespondierenden Daten zu der so klassifizierten Seitenbegrenzung (6).

2. Verfahren nach Anspruch 1,
**dadurch gekennzeichnet,**
**dass** das Abtasten mit dem Abstandssensor (9, 10, 11, 12) zum Ermitteln der Seitenbegrenzung (6) der Parklücke (3) im Verfahrensschritt (S1) zusammen mit Messen einer Tiefe (5) der Parklücke (3) erfolgt.

3. Verfahren nach Anspruch 1 oder 2,
**dadurch gekennzeichnet,**
**dass** im Teilschritt (S2c) die Impulslänge (18, 18') und die Amplitude des Echoimpulses (17, 17') oder nur die Amplitude des Echoimpulses (17, 17') mit gespeicherten Tabellenwerten zum Klassifizieren der Seitenbegrenzung (6) verglichen wird.

4. Verfahren nach einem der Ansprüche 1 bis 3,
**dadurch gekennzeichnet, dass** der Verfahrensschritt (S3) Übergeben von Daten die folgenden Teilschritte aufweist:
(S3a) Übergeben von Daten der klassifizierten Seitenbegrenzung (6) an das Einparkassistenzsystem zum Erzeugen einer Einfahrtrajektorie (14) durch das Einparkassistenzsystem;
(S3b) Abtasten der Seitenbegrenzung (6) mittels des Abstandssensors (9, 10, 11, 12) und Auswerten des Echoimpulses (17, 17') des Abstandssensors (9, 10, 11, 12) beim Einparken des Fahrzeugs (1) in die Parklücke (3) längs der Einfahrtrajekorie (14) zum Plausibilisieren der ermittelten Seitenbegrenzung (6); und
(S3c) Weiteres Ausführen des Einparkens längs der Einfahrtrajektorie (14) bei erfolgreicher Plausibilisierung oder Erzeugen einer korrigierten Einfahrtrajektorie (14).

5. Verfahren nach Anspruch 4,
**dadurch gekennzeichnet,**
**dass** im Teilschritt (S3b) Abtasten der Seitenbegrenzung (6) eine Empfindlichkeit des Abstandssensors (9, 10, 11, 12) in Stufen verringert wird, wobei die Amplitude seines Echoimpulses (17, 17') mit einem vorgebbaren Schwellwert und/oder Muster zum Klassifizieren der Seitenbegrenzung (6) verglichen wird.

6. Verfahren nach Anspruch 5,
**dadurch gekennzeichnet,**
**dass** im Teilschritt (S3b) Abtasten der Seitenbegrenzung (6) ein Abstrahlwinkel eines Abstandssensors (9, 10, 11, 12) in auf verschiedene vorgebbare Werte umgestellt wird, wobei die Amplitude seines Echoimpulses (17, 17') mit einem vorgebbaren Schwellwert und/oder Muster zum Klassifizieren der Seitenbegrenzung (6) verglichen wird.

## Claims

1. Method for classifying side boundaries (6) of a parking space (3) for a parking assistance system of a motor vehicle (1) having at least one distance sensor (9, 10, 11, 12) and a control device (21), with the following method steps:
(S1) scanning the parking space (3) with the distance sensor (9, 10, 11, 12) in order to determine the side boundary (6) of the parking space (3);
(S2) evaluating an echo pulse (17, 17') of the distance sensor (9, 10, 11, 12) in order to classify the determined side boundary (6); and
(S3) transferring data about the side boundary (6) classified in this way to the parking assistance system, **characterized in that** the method step (S2) evaluation of an echo pulse (17, 17') has the following substeps:
(S2a) comparison of an amplitude of the echo pulse (17, 17') with a predefinable threshold value (19);
(S2b) determination of a pulse length (18, 18') of the echo pulse (17, 17') if the predefinable threshold value (19) is exceeded;
(S2c) comparison of the pulse length (18, 18') of the echo pulse (17, 17') with a stored table value in order to classify the side boundary (6); and
(S2d) generation of corresponding data relating to the side boundary (6) classified in this way.

2. Method according to Claim 1, **characterized in that** the scanning with the distance sensor (9, 10, 11, 12) in order to determine the side boundary (6) of the parking space (3) takes place in the method step (S1) together with the measurement of a depth (5) of the parking space (3).

3. Method according to Claim 1 or 2, **characterized in that** in the substep (S2c) the pulse length (18, 18') and the amplitude of the echo pulse (17, 17') or only the amplitude of the echo pulse (17, 17') is compared with stored table values in order to classify the side boundary (6).

4. Method according to one of Claims 1 to 3, **characterized in that** the method step (S3) of transferring data has the following substeps:
(S3a) transferring data about the classified side boundary (6) to the parking assistance system in order to generate a driving in trajectory (14) by means of the parking assistance system;
(S3b) scanning the side boundary (6) by means of a distance sensor (9, 10, 11, 12) and evaluating the echo pulse (17, 17') of the distance sensor (9, 10, 11, 12) when parking the vehicle (1) in the parking space (3) along the driving in trajectory (14) in order to check the plausibility of the determined side boundary (6); and
(S3c) further execution of the parking process along the driving in trajectory (14) when successful checking of the plausibility or generation of a corrected driving in trajectory (14) occurs.

5. Method according to Claim 4, **characterized in that** in the substep (S3b) of scanning the side boundary (6) the sensitivity of the distance sensor (9, 10, 11, 12) is reduced in increments, wherein the amplitude of its echo pulse (17, 17') is compared with a predefinable threshold value and/or pattern in order to classify the side boundary (6).

6. Method according to Claim 5, **characterized in that** in the substep (S3b) of scanning the side boundary (6) a radiation angle of a distance sensor (9, 10, 11, 12) is set to different predefinable values, wherein the amplitude of its echo pulse (17, 17') is compared with a predefinable threshold value and/or pattern in order to classify the side boundary (6).

## Revendications

1. Procédé de classification des limites latérales (6) d'un emplacement de stationnement (3) pour un système d'assistance au stationnement d'un véhicule automobile (1) avec au moins un capteur de distance (9, 10, 11, 12) et une installation de commande (21), et comprenant les étapes suivantes :
(S1) détection de l'emplacement de stationnement (3) à l'aide d'un capteur de distance (9, 10, 11, 12) pour déterminer la limite latérale (6) de l'emplacement de stationnement (3),
(S2) exploitation d'un écho impulsionnel (17, 17') du capteur de distance (9, 10, 11, 12) pour classifier la limite latérale obtenue (6) et
(S3) transmettre les données de la limite latérale (6) ainsi classifiée vers le système d'assistance au stationnement,
**caractérisé en ce que**
l'étape (S2) d'exploitation de l'écho impulsionnel (17, 17') comprend les étapes partielles suivantes :
(S2a) comparaison de l'amplitude de l'écho impulsionnel (17, 17') à un seuil prédéfini (19),
(S2b) détermination d'une longueur d'impulsion (18, 18') de l'écho impulsionnel (17, 17') si le seuil prédéfini (19) est dépassé,
(S2c) comparaison de la longueur de l'impulsion (18, 18') de l'écho impulsionnel (17, 17') à une valeur enregistrée dans un tableau pour classifier la limite latérale (6) et
(S2d) créer des donner correspondant à la limite latérale classifiée (6).

2. Procédé selon la revendication 1,
**caractérisé en ce qu'**
on effectue la détection à l'aide du capteur de distance (9, 10, 11, 12) pour déterminer la limite latérale (6) de l'emplacement de stationnement (3) dans l'étape de procédé (S1) avec mesure de la profondeur (5) de l'emplacement de stationnement (3).

3. Procédé selon la revendication 1 ou 2,
**caractérisé en ce que**
dans l'étape partielle (S2c), on compare la longueur d'impulsion (18, 18') et l'amplitude de l'écho impulsionnel (17, 17') ou seulement l'amplitude de l'écho impulsionnel (17, 17') à des valeurs enregistrées dans le tableau pour classifier la limite latérale (6).

4. Procédé selon l'une des revendications 1 à 3,
**caractérisé en ce que**
l'étape de procédé (S3) de transfert des données comprend les étapes partielles suivantes :
(S3a) transfert des données de la limite latérale classifiée (6) au système d'assistance au stationnement pour générer une trajectoire d'entrée (14) avec le système d'assistance au stationnement,
(S3b) détection de la limite latérale (6) à l'aide du capteur de distance (9, 10, 11, 12) et exploitation de l'écho impulsionnel (17, 17') du capteur de distance (9, 10, 11, 12) lors de l'engagement du véhicule (1) dans l'emplacement de stationnement (3) le long de la trajectoire d'entrée (14) pour rendre plausible la limite latérale déterminée (6) et
(S3c) continuer d'exécuter la manoeuvre de rangement le long de la trajectoire d'entrée (14) si le contrôle de plausibilité a réussi ou généré une trajectoire d'entrée (14), corrigée.

5. Procédé selon la revendication 4,
**caractérisé en ce que**
dans l'étape partielle (S3b) de détection de la limite latérale (6), on réduit par étape, la sensibilité du capteur de distance (9, 10, 11, 12), et on compare l'amplitude de son écho impulsionnel (17, 17') à un seuil prédéfini et/ou à un modèle pour classifier la limite latérale (6).

6. Procédé selon la revendication 5,
**caractérisé en ce que**
dans l'étape partielle (S3b) de détection de la limite latérale (6), on convertit un angle de rayonnement d'un capteur de distance (9, 10, 11, 12) en différentes valeurs prédéfinies, l'amplitude de son écho impulsionnel (17, 17') étant alors comparée à un seuil prédéfini et/ou un modèle pour classifier la limite latérale (6).
